(19) Europäisches Patentamt
European Patent Office
Office européen des brevets

(11) **EP 2 892 737 B1**

(12) **EUROPÄISCHE PATENTSCHRIFT**

(45) Veröffentlichungstag und Bekanntmachung des Hinweises auf die Patenterteilung:
**04.01.2017 Patentblatt 2017/01**

(51) Int Cl.:
**B60C 11/24** (2006.01)    **B60C 23/06** (2006.01)

(21) Anmeldenummer: **13745855.0**

(22) Anmeldetag: **08.08.2013**

(86) Internationale Anmeldenummer:
**PCT/EP2013/066596**

(87) Internationale Veröffentlichungsnummer:
**WO 2014/037179 (13.03.2014 Gazette 2014/11)**

(54) **VERFAHREN ZUR BESTIMMUNG DER PROFILTIEFE EINES FAHRZEUGREIFENS MIT EINEM AUF DER REIFENINNENSEITE ANGEORDNETEN REIFENMODUL**

METHOD FOR TREAD WEAR INDICATION FOR A TIRE EQUIPPED WITH A MODULE AT ITS INNER SURFACE

METHODE POUR ETABLIR L'USURE D'UN PNEU EQUIPPE AVEC UN MODULE ATTACHE A LA SURFACE INTERNE DU PNEU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.09.2012 DE 102012108348**

(43) Veröffentlichungstag der Anmeldung:
**15.07.2015 Patentblatt 2015/29**

(73) Patentinhaber: **Continental Reifen Deutschland GmbH**
**30165 Hannover (DE)**

(72) Erfinder:
• **LEHMANN, Jörg**
  **30453 Hannover (DE)**
• **LANGE, Bernd**
  **31675 Bückeburg (DE)**

(74) Vertreter: **Widjaja, Wira**
**Continental Aktiengesellschaft**
**Patente und Lizenzen**
**Postfach 169**
**30001 Hannover (DE)**

(56) Entgegenhaltungen:
**EP-A1- 1 759 891    JP-A- 2005 205 956**
**JP-A- 2007 153 034    US-A- 5 749 984**

EP 2 892 737 B1

**Beschreibung**

Die Erfindung betrifft ein Verfahren zur Bestimmung der Profiltiefe eines Fahrzeugreifens. Es ist bekannt, bei Fahrzeugreifen eine Reifendrucküberwachung einzusetzen, um einen Druckverlust sicher zu detektieren.

Während für den Reifendruck unterschiedliche Systeme angeboten werden, die während der Fahrt eine Reifendrucküberwachung durchführen, muss die Profiltiefe der Fahrzeugreifen immer noch per Hand gemessen werden.

Dokument JP2007153034 offenbart ein Verfahren zur Bestimmung der Profiltiefe eines Reifens basierend auf der Messung der Umfangspositionen der Beschleunigungsextremwerte beim Abrollen.

Der Erfindung lag die Aufgabe zugrunde, ein Verfahren bereitzustellen, mit dem herkömmliche Systeme verbessert werden können.

Gelöst wird die Aufgabe durch ein Verfahren mit folgenden Schritten:

a) Messen von Beschleunigungssignalen von einem auf der Reifeninnenseite angeordneten Reifenmodul,

wobei das Reifenmodul im Wesentlichen gegenüberliegend zum Laufstreifen angeordnet ist und einen Beschleunigungssensor zur Messung von Beschleunigungswerten in radialer Richtung umfasst,
b) Bestimmung eines minimalen Beschleunigungswertes beim Rotieren des Fahrzeugreifens und bei einer konstanten Fahrtgeschwindigkeit,

wobei der Laufstreifen mit dem gegenüberliegenden Reifenmodul sich im Zeitpunkt der Beschleunigungsmessung im Bereich der Bodenaufstandsfläche des Fahrzeugreifens befindet,
c) Bestimmung des maximalen Innenradius der Reifeninnenseite in der Mitte der Bodenaufstandsfläche des Fahrzeugreifens,

wobei der maximale Innenradius die Krümmung der Reifeninnenseite in Umfangsrichtung der Bodenaufstandsfläche wiedergibt und

im Wesentlichen von der Stärke des Gummipaketes zwischen Reifengürtel sowie Fahrbahn abhängig ist,
wobei der maximale Innenradius aus dem Quotienten der Fahrtgeschwindigkeit zum Quadrat und dem minimalen Beschleunigungswert ermittelt wird,
d) Ermittlung der Profiltiefe des Fahrzeugreifens mit einer Signalverarbeitung,

wobei sich der maximale Innenradius mit abnehmender Profiltiefe signifikant verändert und bei der Ermittlung der Profiltiefe zugrunde gelegt wird, dass die Profiltiefe über eine direkte mathematische Funktion mit dem maximalen Innenradius gekoppelt ist,
e) Übermittlung der ermittelten Profiltiefe an eine Empfangseinheit im Fahrzeug und/ oder Anzeigen der Profiltiefe mit einer Anzeigevorrichtung.

Ein Vorteil der Erfindung ist insbesondere darin zu sehen, dass durch das erfindungsgemäße Verfahren auf einfache Weise die Profiltiefe bei Fahrzeugreifen mit einem auf der Reifeninnenseite angeordneten Reifenmodul ermittelt werden kann.

Entsprechende Reifenmodule weisen in der Regel einen Beschleunigungssensor auf, der für unterschiedliche Funktionen genutzt wird. Überraschender Weise lassen sich die Messsignale des Beschleunigungssensors ebenfalls zur Messung und Überwachung der Profiltiefe einsetzen. Es ist kein weiterer spezieller Sensor erforderlich, der zusätzlich im Reifenmodul integriert werden müsste. Durch eine Signalauswertung der Beschleunigungswerte lässt sich die Profiltiefe indirekt bestimmen. Das aufwendige Überprüfen der Profiltiefe mit einem mechanischen Profiltiefenmesser kann dadurch entfallen. Insbesondere bei einem Lkw mit einem Anhänger wird durch eine automatische Profiltiefenüberwachung ein hoher Arbeitsaufwand eingespart.

In einer vorteilhaften Weiterbildung der Erfindung ist vorgesehen, dass bei Schritt b) ein Referenz-Beschleunigungswert bei einem neuen Fahrzeugreifen ohne Profilabrieb gemessen wird, wobei dieser Referenz-Beschleunigungswert als Vergleichswert zur Bestimmung der Profiltiefe bei der Signalverarbeitung verwendet wird.

Der Referenzbeschleunigungswert lässt sich einfach direkt im Speichersystem des Reifenmoduls oder des Empfängers abspeichern und wird für die nachfolgenden Messsignale als Vergleichswert herangezogen.

In einer weiteren vorteilhaften Weiterbildung der Erfindung ist vorgesehen, dass bei Schritt c) die Fahrtgeschwindigkeit aus dem konstanten Innenradius der Reifeninnenseite und dem konstanten Beschleunigungswert außerhalb der Bodenaufstandsfläche ermittelt wird. Dadurch lässt sich die Fahrtgeschwindigkeit schnell und auf einfache Weise ermitteln.

In einer weiteren vorteilhaften Weiterbildung der Erfindung ist vorgesehen, dass bei Schritt c) die Fahrtgeschwindigkeit vom Fahrzeugtacho für die Signalverarbeitung genutzt wird. Die Fahrtgeschwindigkeit vom Fahrzeugtacho des Fahrzeuges lässt sich auf einfache Weise in die Signalverarbeitung integrieren.

In einer weiteren vorteilhaften Weiterbildung der Erfindung ist vorgesehen, dass ein maximaler Beschleunigungswert beim Einlaufen des Reifenmoduls in die Bodenaufstandsfläche als Triggersignal genutzt wird, um anschließend durch kontinuierliche Messungen den minimalen Beschleunigungswert bei Schritt b) zu erfassen. Eine Schwierigkeit besteht darin, den minimalen Beschleunigungswert zu bestimmen. Mit dem Trigger-Signal können die hohen Beschleunigungen beim Eintritt in den Latsch zur Identifikation des messrelevanten Bereichs genutzt werden.

In einer weiteren vorteilhaften Weiterbildung der Erfindung ist vorgesehen, dass die Messung der Beschleunigungswerte bei einer weitestgehend konstanten Fahrweise des Fahrzeuges erfolgt.

Dadurch wird die Messgenauigkeit zur Messung des minimalen Beschleunigungswertes erhöhen.

In einer weiteren vorteilhaften Weiterbildung der Erfindung ist vorgesehen, dass die Messung der Beschleunigungswerte bei Fahrzeuggeschwindigkeiten größer als ca. 70 Km/h erfolgt.

An einem Ausführungsbeispiel soll die Erfindung nachfolgend erläutert werden.

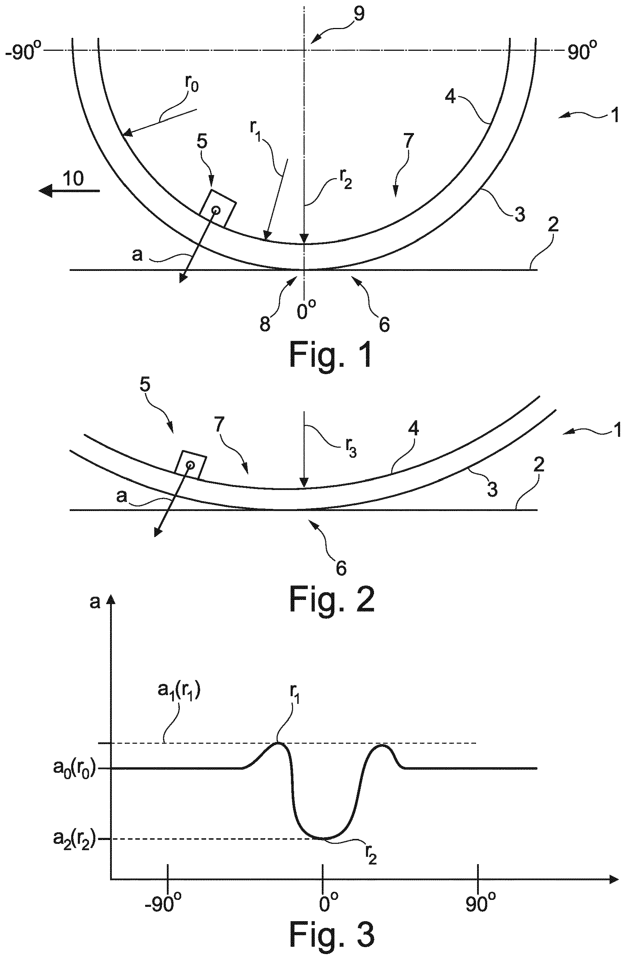

Die Fig. 1 zeigt schematisch einen Querschnitt durch einen Fahrzeugreifen 1, der auf einer Fahrbahn 2 abrollt. Der Fahrzeugreifen 1 ist in einer Querschnittsansicht dargestellt, wobei der Fahrzeugreifen um die Mittelachse 9 rotiert. Der Fahrzeugreifen 1 rollt in Fahrtrichtung 10 auf der Fahrbahn 2 ab. Auf der Reifeninnenseite 4, die durch einen Reifeninnenliner gebildet wird, ist ein Reifenmodul 5 mit einem integrierten Beschleunigungssensor angeordnet. Der Beschleunigungssensor misst Beschleunigungswerte a in radiale Richtung zu unterschiedlichen Zeitpunkten. Die abgeflachte Bodenaufstandsfläche 6 des Fahrzeugreifens liegt an der Fahrbahnoberfläche 2 an. Gegenüberliegend zur Bodenaufstandsfläche 6 ist die ebenfalls abgeflachte Reifeninnenseite 7 dargestellt, die gegenüberliegend zur Bodenaufstandsfläche angeordnet ist. Die Darstellung zeigt, dass sich der Innenradius r kontinuierlich beim Abrollen auf der Fahrbahn verändert. Der Innenradius r0 gibt den Innenradius außerhalb der Bodenaufstandsfläche wieder. Dieser Innenradius ist im Allgemeinen konstant und nur vom jeweiligen Reifentyp abhängig. Der Innenradius r2 ist der maximale Innenradius in der Mitte der Bodenaufstandsfläche 8. Aufgrund der abgeflachten Reifeninnenseite ist der Innenradius r2 im Allgemeinen größer als der Innenradius r0. Der Innenradius r1 gibt im Wesentlichen den Innenradius wieder, der beim Eintreten in die Bodenaufstandsfläche 6 vorliegt. Die Außenseite des Laufstreifens 3 ist ebenfalls schematisch dargestellt. Die Winkelangaben -90°, 0° und + 90° beziehen sich auf den Umfang des Fahrzeugreifens. Entscheidend ist, dass die Krümmung der Reifeninnenseite in Umfangsrichtung in der Bodenaufstandsfläche im Wesentlichen von der Stärke des Gummipaketes zwischen Reifengürtel und Fahrbahn abhängt. Die Krümmung bzw. der Innenradius der Reifeninnenseite ist somit eine Funktion der Profiltiefe. Bei einem komplett abgefahrenen Fahrzeugreifen ohne Reifenprofil ist die Krümmung der Reifeninnenseite in der Bodenaufstandsfläche nahezu 0, d.h., dass die Reifeninnenseite nahezu parallel zur Fahrbahnoberfläche verläuft. Bei einem Neureifen, insbesondere bei Nutzfahrzeugreifen ist ein relativ dickes Gummipaket zwischen Reifengürtel und Straße. Dieses Gummipaket erzwingt eine relativ große Krümmung der Reifeninnenseite, wie sie in der Fig. 1 dargestellt ist.

Die Fig. 2 zeigt schematisch den Fahrzeugreifen 1, bei dem das Reifenprofil aufgrund von Abrieb abgefahren ist. Das Gummipaket zwischen Reifengürtel und Fahrbahnoberfläche ist nur noch relativ dünn. Das hat zur Folge, dass der Innenradius r3 *größer* ist als der Innenradius r2, der bei einem Neureifen vorliegt. Der größer werdende Innenradius r3 ist somit ein Indikator für eine abnehmende Profiltiefe des Fahrzeugreifens. Der Radius auf der Reifeninnenseite lässt *sich* aus dem Quotienten der Fahrtgeschwindigkeit zum Quadrat und der entsprechenden Beschleunigung a berechnen.

Die *Fig. 3* zeigt das Beschleunigungssignal a beim Ein- und Austreten des Fahrzeugreifens in die Bodenaufstandsfläche. Auf der Abzisse ist die Beschleunigung a aufgetragen, die durch den Beschleunigungssensor des Reifenmoduls gemessen wird. Der Beschleunigungswert a0 ist außerhalb der Bodenaufstandsfläche konstant. Beim Eintreten in die Bodenaufstandsfläche steigt der Beschleunigungswert kurzzeitig auf die maximale Beschleunigung a1 an. Dieser Beschleunigungswert a1 kann als Triggersignal genutzt werden, um den nachfolgenden relevanten Messbereich zu identifizieren. Anschließend fällt der Beschleunigungswert a auf den minimalen Wert a2 ab. Dieser Beschleunigungswert a2 entspricht dem Beschleunigungswert, wenn das Reifenmodul sich im Wesentlichen in der Mitte der Bodenaufstandsfläche befindet. Mit Hilfe dieses Beschleunigungswertes a2 lässt sich der Innenradius r2 ermitteln, welcher ein Maß für die Profiltiefe des Fahrzeugreifens ist. Der konstante Beschleunigungswert a0 kann dazu herangezogen werden, um die Fahrtgeschwindigkeit zu ermitteln. Alternativ dazu, kann die Fahrtgeschwindigkeit von dem Fahrzeugtacho des Fahrzeuges abgenommen werden.

Funktionen zur Ermittlung der Profiltiefe:

$$V^2/a2 = r2 \qquad (Gl1)$$

$$Profiltiefe = f\,(r2) \qquad (Gl2)$$

$$V = \sqrt{(a0 * r0)} \qquad (Gl3)$$

Mit der Gleichung G11 läßt sich der Innenradius ermitteln.

Die Gleichung G12 bedeutet, dass die Profiltiefe eine Funktion des Innenradius r1 ist. Mit der Gleichung G13 läßt sich die konstante Fahrtgeschwindigkeit V ermitteln.

**Bezugszeichenliste (Teil der Beschreibung)**

1  Fahrzeugreifen
2  Fahrbahn
3  Laufstreifen-Außenseite
4  Reifeninnenseite bzw. Reifeninnerliner
5  Reifenmodul mit Beschleunigungssensor
6  abgeflachte Bodenaufstandsfläche des Fahrzeugreifens
7  abgeflachte Reifeninnenseite gegenüberliegend zur Bodenaufstandsfläche des Fahrzeugreifens

8   Mitte der Bodenaufstandsfläche in Umfangsrichtung des Fahrzeugreifens

9   Mittelachse

10   Fahrtrichtung

a   Beschleunigung in radialer Richtung

a0   konstanter Beschleunigungswert außerhalb der Bodenaufstandsfläche (bei konstanten Innenradius r0)

a1   maximaler Beschleunigungswert beim Eintreten in die Bodenaufstandsfläche

a2   minimaler Beschleunigungswert in der Mitte der Bodenaufstandsfläche (bei maximalen Innenradius r2)

r0   konstanter Innenradius des Fahrzeugreifens

r1   Innenradius beim Eintreten in die Bodenaufstandsfläche

r2   maximaler Innenradius in der Mitte der Bodenaufstandsfläche

V   Fahrtgeschwindigkeit

**Patentansprüche**

1.   Verfahren zur Bestimmung der Profiltiefe eines Fahrzeugreifens (1) mit einem auf der Reifeninnenseite angeordneten Reifenmodul mit folgenden Schritten:

a) Messen von Beschleunigungssignalen von einem auf der Reifeninnenseite angeordneten Reifenmodul (5), wobei das Reifenmodul (5) im Wesentlichen gegenüberliegend zum Laufstreifen (3) angeordnet ist und einen Beschleunigungssensor zur Messung von Beschleunigungswerten (a, a0, a1, a2) in radialer Richtung umfasst,

b) Bestimmung eines minimalen Beschleunigungswertes (a2) beim Rotieren des Fahrzeugreifens und bei einer konstanten Fahrtgeschwindigkeit (V), wobei der Laufstreifen (3) mit dem gegenüberliegenden Reifenmodul (5) sich im Zeitpunkt der Beschleunigungsmessung im Bereich der Bodenaufstandsfläche (6) des Fahrzeugreifens (1) befindet,

c) Bestimmung des maximalen Innenradius (r2) der Reifeninnenseite in der Mitte der Bodenaufstandsfläche (8) des Fahrzeugreifens (1), wobei der maximale Innenradius (r2) die Krümmung der Reifeninnenseite (4) in Umfangsrichtung der Bodenaufstandsfläche (6) wiedergibt und im Wesentlichen von der Stärke des Gummipaketes zwischen Reifengürtel sowie Fahrbahn (2) abhängig ist, wobei der maximale Innenradius (r2) aus dem Quotienten der Fahrtgeschwindigkeit (V) zum Quadrat und dem minimalen Beschleunigungswert (a2) ermittelt wird,

d) Ermittlung der Profiltiefe des Fahrzeugreifens (1) mit einer Signalverarbeitung, wobei sich der maximale *Innenradius (r2)* mit abnehmender Profiltiefe signifikant verändert und bei der Ermittlung der Profiltiefe zugrunde gelegt wird, dass die Profiltiefe über eine direkte mathematische Funktion (G12) mit dem maximalen *Innenradius (r2)* gekoppelt ist,

e) Übermittlung der ermittelten Profiltiefe an eine Empfangseinheit im Fahrzeug und/ oder Anzeigen der Profiltiefe mit einer Anzeigevorrichtung.

2.   Verfahren nach Anspruch 1, **dadurch gekennzeichnet, dass** bei Schritt b) ein Referenz-Beschleunigungswert bei einem neuen Fahrzeugreifen ohne Profilabrieb gemessen wird, wobei dieser Referenz-Beschleunigungswert als Vergleichswert zur Bestimmung der Profiltiefe bei der Signalverarbeitung verwendet wird.

3.   Verfahren nach einem der vorhergehenden Ansprüche, **dadurch gekennzeichnet, dass** bei Schritt c) die Fahrtgeschwindigkeit (V) aus dem konstanten Innenradius (r0) der Reifeninnenseite (4) und dem konstanten Beschleunigungswert (a0) außerhalb der Bodenaufstandsfläche (6) ermittelt wird.

4.   Verfahren nach einem der vorhergehenden Ansprüche, **dadurch gekennzeichnet, dass** bei Schritt c) die Fahrtgeschwindigkeit (V) vom Fahrzeugtacho für die Signalverarbeitung genutzt wird.

5.   Verfahren nach einem der vorhergehenden Ansprüche, **dadurch gekennzeichnet, dass** ein maximaler Beschleunigungswert (a1) beim Einlaufen des Reifenmoduls (5) in die Bodenaufstandsfläche (6) als Triggersignal genutzt wird, um anschließend durch kontinuierliche Messungen den minimalen Beschleunigungswert (a2) bei Schritt b) zu erfassen.

6.   Verfahren nach einem der vorhergehenden Ansprüche, **dadurch gekennzeichnet, dass** die Messung der Beschleunigungswerte (a1, a2) bei einer weitestgehend konstanten Fahrweise des Fahrzeuges erfolgt.

7.   Verfahren nach einem der vorhergehenden Ansprüche, **dadurch gekennzeichnet, dass**

die Messung der Beschleunigungswerte (a1, a2) bei Fahrzeuggeschwindigkeiten größer als ca. 70 Km/h erfolgt.

**Claims**

1. Method for determining the depth of tread of a vehicle tyre (1) with a tyre module arranged on the inner side of the tyre, comprising the following steps:

    a) measuring acceleration signals from a tyre module (5) arranged on the inner side of the tyre, the tyre module (5) being arranged substantially opposite the tread strip (3) and comprising an acceleration sensor for measuring acceleration values (a, a0, a1, a2) in a radial direction,
    b) determining a minimum acceleration value (a2) during rotation of the vehicle tyre and at a constant travelling speed (V)
    the tread strip (3) with the opposite tyre module (5) being in the region of the ground contact area (6) of the vehicle tyre (1) at the time of the acceleration measurement,
    c) determining the maximum internal radius (r2) of the inner side of the tyre in the centre of the ground contact area (8) of the vehicle tyre (1), the maximum internal radius (r2) reflecting the curvature of the inner side of the tyre (4) in the circumferential direction of the ground contact area (6) and
    being substantially dependent on the thickness of the rubber package between the tyre breaker belt and the roadway (2),
    the maximum internal radius (r2) being determined from the quotient of the travelling speed (V) squared and the minimum acceleration value (a2)
    d) determining the depth of tread of the vehicle tyre (1) with signal processing, the maximum *internal radius (r2)* changing significantly as the depth of tread decreases and the determination of the depth of tread being based on the fact that the depth of tread is coupled with the maximum *internal radius (r2)* via a direct mathematical function (equation 2),
    e) transmitting the determined depth of tread to a receiving unit in the vehicle and/or indicating the depth of tread by an indicating device.

2. Method according to Claim 1, **characterized in that**, in step b), a reference acceleration value is measured on a new vehicle tyre without tread wear, this reference acceleration value being used as a comparative value for determining the depth of tread in the signal processing.

3. Method according to one of the preceding claims, **characterized in that**, in step c), the travelling speed (V) is determined from the constant internal radius (r0) of the inner side of the tyre (4) and the constant acceleration value (a0) outside the ground contact area (6).

4. Method according to one of the preceding claims, **characterized in that**, in step c), the travelling speed (V) from the vehicle tachometer is used for the signal processing.

5. Method according to one of the preceding claims, **characterized in that** a maximum acceleration value (a1) when the tyre module (5) enters the ground contact area (6) is used as a triggering signal for subsequently recording the minimum acceleration value (a2) by continuous measurements in step b).

6. Method according to one of the preceding claims,

    **characterized in that** the measuring of the acceleration values (a1, a2) takes place while the vehicle is to the greatest extent being driven constantly.

7. Method according to one of the preceding claims, **characterized in that** the measuring of the acceleration values (a1, a2) takes place at vehicle speeds greater than about 70 km/h.

**Revendications**

1. Procédé de détermination de la profondeur de profil d'un pneu de véhicule (1) avec un module de pneu disposé sur le côté intérieur du pneu, comprenant les étapes suivantes :

    a) mesure de signaux d'accélération d'un module de pneu (5) disposé sur le côté intérieur du pneu, le module de pneu (5) étant disposé sensiblement à l'opposé de la bande de roulement (3) et comprenant un capteur d'accélération destiné à mesurer des valeurs d'accélération (a, a0, a1, a2) dans le sens radial,
    b) détermination d'une valeur d'accélération minimale (a2) lors de la rotation du pneu de véhicule et avec une vitesse de déplacement (V) constante, la bande de roulement (3) à l'opposé de laquelle se trouve le module de pneu (5) se trouvant dans la zone de la surface de contact au sol (6) du pneu de véhicule (1) à l'instant de la mesure de l'accélération,
    c) détermination du rayon intérieur maximum (r2) du côté intérieur du pneu au centre de la surface de contact au sol (8) du pneu de véhicule (1), le rayon intérieur maximum (r2) restituant la courbure du côté intérieur du pneu (4) dans la direction circonférentielle de la surface de contact au sol (6) et étant sensiblement dépendant de l'épaisseur de la garniture en caoutchouc entre la nappe d'armature de pneu et la chaussée (2), le rayon intérieur maximum (r2) étant déterminé à partir du quotient de la vitesse de déplacement (V) par le carré et la valeur d'accélération minimale (a2),

d) détermination de la profondeur de profil du pneu de véhicule (1) avec un traitement de signal, le rayon intérieur maximum (r2) variant fortement à mesure que la profondeur de profil diminue et l'hypothèse adoptée lors de la détermination de la profondeur de profil est que la profondeur de profil est couplée au rayon intérieur maximum (r2) par le biais d'une fonction mathématique directe (G12),

e) communication de la profondeur de profil déterminée à une unité de réception dans le véhicule et/ou affichage de la profondeur de profil avec un dispositif d'affichage.

2. Procédé selon la revendication 1, **caractérisé en ce qu'**à l'étape b), une valeur d'accélération de référence est mesurée en présence d'un pneu de véhicule neuf sans usure du profil, cette valeur d'accélération de référence étant utilisée lors du traitement de signal comme valeur comparative pour la détermination de la profondeur de profil.

3. Procédé selon l'une des revendications précédentes, **caractérisé en ce qu'**à l'étape c), la vitesse de déplacement (V) est déterminée à partir du rayon intérieur constant (r0) du côté intérieur du pneu (4) et de la valeur d'accélération constante (a0) en-dehors de la surface de contact.au sol (6).

4. Procédé selon l'une des revendications précédentes, **caractérisé en ce qu'**à l'étape c), la vitesse de déplacement (V) est utilisée par le tachymètre du véhicule pour le traitement de signal.

5. Procédé selon l'une des revendications précédentes, **caractérisé en ce qu'**une valeur d'accélération maximale (a1) est utilisée comme signal de déclenchement lors de l'entrée du module de pneu (5) dans la surface de contact au sol (6) afin d'acquérir ensuite la valeur d'accélération minimale (a2) à l'étape b) par des mesures continues.

6. Procédé selon l'une des revendications précédentes, **caractérisé en ce que** la mesure des valeurs d'accélération (a1, a2) est effectuée lors d'une conduite largement constante du véhicule.

7. Procédé selon l'une des revendications précédentes, **caractérisé en ce que** la mesure des valeurs d'accélération (a1, a2) est effectuée à des vitesses du véhicule supérieures à environ 70 km/h.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2007153034 B